Europäisches Patentamt

European Patent Office

Office européen des brevets

(19)

(11) **EP 0 601 608 B1**

(12) **EUROPÄISCHE PATENTSCHRIFT**

(45) Veröffentlichungstag und Bekanntmachung des Hinweises auf die Patenterteilung:
**03.06.1998 Patentblatt 1998/23**

(51) Int Cl.6: **F23N 5/16**, B05B 1/08, F23C 11/04

(21) Anmeldenummer: **93120001.8**

(22) Anmeldetag: **10.12.1993**

(54) **Aktuator zum Aufprägen von Massenstrom- bzw. Druckschwankungen auf unter Druck stehende Flüssigkeitsströme**

Actuator for imposing mass flow or pressure fluctuations on a pressurized liquid flow

Dispositif d'actionnement pour imposer des fluctuations des courants de masse ou des pressions dans un courant de liquide sous pression

(84) Benannte Vertragsstaaten:
**CH DE ES FR GB IT LI SE**

(30) Priorität: **10.12.1992 DE 4241729**

(43) Veröffentlichungstag der Anmeldung:
**15.06.1994 Patentblatt 1994/24**

(73) Patentinhaber: **SIEMENS AKTIENGESELLSCHAFT 80333 München (DE)**

(72) Erfinder:
• **Vortmeyer, Dieter, Prof. Dr. 80638 München (DE)**
• **Gleis, Stephan 83071 Stephanskirchen (DE)**
• **Hermann, Jakob 82281 Egenhofen (DE)**

(56) Entgegenhaltungen:
DE-A- 3 521 674     DE-A- 4 040 745
US-A- 3 896 889

**Beschreibung**

Die Erfindung bezieht sich auf alle die technischen Gebiete, bei denen Flüssigkeiten unter hohem Druck zu einer Düse gefördert werden, die den Zweck hat, die Flüssigkeit entweder fein zu zerstäuben oder einen scharfen Flüssigkeitsstrahl mit hohem Impuls zu bilden. Oftmals ist es bei den oben beschriebenen technischen Systemen notwendig, statt eines konstanten, von der Flüssigkeitsfördereinrichtung vorgegebenen mittleren Massenstromes aus der Düse einen im weiten Rahmen beliebig steuer- und regelbaren Massenstrom zu erhalten.

Langsame Änderungen des Massenstromes lassen sich durch z.B. Drehzahländerungen an der Flüssigkeitsfördereinrichtung (Pumpe), veränderte Einstellung eines Überdruck-/Überströmventiles, Einsatz eines Massenstromregelventiles etc. erreichen. Durch diese Maßnahmen lassen sich jedoch bei der Massenstromänderung lediglich Wiederholraten von DC bis zu wenigen Hertz erzielen.

Wenn höhere Frequenzen der Massenstrommodulation benötigt werden, muß auf andere konstruktive Elemente zurückgegriffen werden. Spezielle bauliche Ausführungen von Massenstromregelventilen mit Servounterstützung [1] oder piezogetriebene Ventile [2] erlauben Frequenzen von bis zu ca. 150 Hz. Die Ziffer in Klammer beziehen sich auf das folgende Literatur verzeichnis. Alle diese Bauformen erzielen die Änderung des Massenstromes durch eine entsprechende Variation eines durchströmten Querschnittes. Werden höhere Frequenzen der Massenstrommodulation benötigt, so gibt es mit den bisher bekannten Bauformen keine Möglichkeit, diese zu erreichen. Spezielle Anwendungsgebiete, bei denen man auf entsprechend höhere Modulationsfrequenzen angewiesen ist, werden im folgenden beschrieben.

Die Erfindung bezieht sich z.B. auf das Gebiet der aktiven Regelung zur Unterdrückung von Verbrennungsschwingungen in Brennkammern, im speziellen für Triebwerke, Nachbrenner und Raketenantriebe. Findet eine Verbrennung in einer Brennkammer statt, kann es unter bestimmten Betriebsbedingungen zu selbsterregten Brennkammerschwingungen kommen, oft auch als Verbrennungsinstabilitäten bezeichnet. Auslöser für diesen Mechanismus sind die Wechselwirkungen zwischen der zeitlichen Leistungsfreisetzung der Flamme und der Akustik der Brennkammer. Bedingung für die Entstehung des beschriebenen Phänomens ist es, daß die zeitliche Leistungsfreisetzung der Flamme zum Zeitpunkt einer positiven Schalldruckamplitude erfolgt (Rayleigh-Kriterium) [3].

Das Auftreten von Verbrennungsinstabilitäten wurde bisher in vielen hochbelasteten Verbrennungssystemen beobachtet. Hier sind an erster Stelle die Antriebssysteme in der Luft- und Raumfahrt zu nennen. Aber auch in Prozeßgaserhitzern und industriellen Feuerungssystemen treten diese Instabilitäten auf [4]. Aufgrund der stark anwachsenden Amplituden von Schalldruck und Energieschwingung kommt es zu einer starken Wechselbelastung der Brennkammer und im Extremfall zu deren Zerstörung. Die hohen Schalldruckamplituden in der Brennkammer führen zudem zu einer starken Lärmemission.

Bei Verbrennungsschwingungen mit Frequenzen oberhalb ca. 1000 Hz eignen sich passive Methoden zur Schwingungsdämpfung recht gut. Unter passiven Maßnahmen versteht man geometrische Veränderungen der Brennkammer, das Anbringen von schallabsorbierenden Bauteilen oder Helmholtz-Resonatoren. Bei niedrigeren Frequenzen sind diese Maßnahmen vielfach ungenügend, um die Schwingungsamplituden unterhalb eines für das Verbrennungssystem schädigenden Maßes zu dämpfen.

Neben den passiven Methoden zur Unterdrückung von Verbrennungsschwingungen wurde in den letzten Jahren zunehmend an aktiven Methoden zur Schwingungsunterdrückung gearbeitet. Hierbei kamen in erster Linie Lautsprecher als Stellglieder zum Einsatz, um die Koppelbedingung zwischen Brennkammerakustik und Energiefreisetzung zu beeinflussen. Der Aufbau der aktiven Regelung von Verbrennungsinstabilitäten stellt sich dabei wie folgt dar: Das Eingangssignal des registrierten Schalldruckes der Brennkammerschwingung wird in geeigneter Weise phasenverschoben, verstärkt und damit ein Lautsprecher so angesteuert, daß der Schall im Verbrennungssystem durch Antischall ausgelöscht wird. In Forschungsarbeiten wird hierbei von einer Dämpfung bis zu 60 dB berichtet [5,6,7]. Aufgrund der Tatsache, daß mit dieser Methode die Quelle für die selbsterregten Verbrennungsschwingungen beseitigt wird, kommt es zu einer Absenkung der Leistung des Stellsignals. Eine umfassende Patentanmeldung zu diesem Gebiet erfolgte von Williams John Eirwyn Ffowcs, Dines Philip Joseph und Maria Anna Heckl [8].

Dem Einsatz von Lautsprechern als aktive Stellglieder zum Unterdrücken von Verbrennungsinstabilitäten sind Grenzen gesetzt, da diese zum einen aufgrund ihrer Baugröße oft schwierig zu integrieren sind und zum anderen gegenüber den Verbrennungsleistungen eine zu geringe Leistungsabgabe besitzen. Aus einer Publikation ist bekannt, daß neben der Beeinflussung der Akustik des Verbrennungssystemes auch die Modulation des Zustroms von vorgemischtem Gas mittels einer veränderlichen Blende eine Absenkung der Verbrennungsinstabilität bewirkt [9]. Diese Methode ist aufgrund der mechanischen Grenzen bei der zeitlichen Variation der Blende auf Verbrennungsinstabilitäten mit niedrigen Frequenzen beschränkt.

Sinnvoller erscheint es deshalb eine Beeinflussung der Brennstoffzufuhr vorzunehmen. Hierbei wird die selbsterregte Verbrennungsschwingung durch eine antizyklische Kraftstoffzufuhr relativ zum Brennkammerschalldruck gedämpft. Der Vorteil dieser Methode liegt in der Eingriffsstelle begründet, da gegenüber der Modulation der Gesamtmassenströme, wie sie bei der aktiven Dämpfung mit Lautsprechern oder veränderlichen Blenden notwendig ist, hier nur der Brennstoffmassenstrom angesteuert wird. Das Konstruktionsvolumen des Stellgliedes läßt sich so wesentlich reduzieren. Die Arbeiten auf diesem Gebiet wurden bisher nur im Labormaßstab durchgeführt und beschränken sich auf die Modulation von gasförmigen Brennstoff, wobei Absenkungen des Schalldruckpegels mit Lautsprechern bis zu 25 dB [10] und mit Auf-Zu-Ventilen bis zu 12 dB [11] erzielt wurden. Die bei den voranstehend zitierten Arbeiten verwendeten Stellglieder sind nicht geeignet, um eine Modulation des Kraftstoffmassenstromes in Druckzerstäuber-Verbrennungssystemen für Flüssigtreibstoffe zu bewerkstelligen.

Von experimentellen Untersuchungen auf dem Gebiet der aktiven Unterdrückung von Verbrennungsinstabilitäten bei Flüssigtreibstoff-Verbrennungssystemen, wie sie vornehmlich in Flugtriebwerken, Nachbrennern und Raketenantrieben zum Einsatz kommen, wurde bisher nicht berichtet. Außer einer theoretischen Untersuchung aus dem Jahre 1952 auf dem Gebiet der aktiven Regelung von Verbrennungsinstabilitäten in Raketenantrieben mittels Kraftstoffmodulation, deren konstruktiver Aufbau bzw. Antriebselemente nicht näher beschrieben wurden [12], gibt es noch eine Patentanmeldung aus dem Jahre 1990 von General Electric [1]. In der Patentanmeldung von GE wird als Stellglied für eine aktive Unterdrückung von Verbrennungsinstabilitäten die Modulation des Brennstoffmassenstroms vorgeschlagen. Hierzu soll ein Servoventil eingesetzt werden. Diese Servoventile haben jedoch den Nachteil, das ihr Frequenzgang schon bei Frequenzen um 150 Hz abknickt und deshalb nur zur Ausregelung von niederfrequenten Verbrennungsschwingungen eingesetzt werden können. Für den Frequenzbereich von ca. 50 bis über 1000 Hz sind bis dato keine Stellglieder zur Modulation des Flüssigtreibstoffes bekannt. Die Notwendigkeit der Entwicklung neuer leistungsfähiger und robuster Aktuatoren läßt sich auch aus einer neueren Veröffentlichung über die bisherigen Möglichkeiten zur aktiven Unterdrückung von Verbrennungsinstabilitäten entnehmen [13].

Gegenstand der Erfindung ist ein Aktuator zum Beeinflussen des Brennstoffmassenstroms mit dem Ziel, eine aktive Regelung von Verbrennungsinstabilitäten bei Flüssigtreibstoff-Brennern und beliebigen Verbrennungssystem in einem Frequenzbereich von ca. 50 bis über 1000 Hz zu ermöglichen. Eine Beeinflussung der mittleren Leistungsfreisetzung soll dabei unterbleiben. Außerdem ist die Erfindung in einem wesentlich größeren Frequenzbereich als das oben beschriebene Servoventil einsetzbar, leicht zu implementieren und störungsunempfindlich. Eine Ansteuerung des Aktuators zur Schadstoffreduzierung sollte zudem gegeben sein. Der Betrieb des Aktuators als Stellglied für die aktive Regelung von Verbrennungsinstabilitäten oder als Mittel zur Schadstoffreduzierung ist hierbei parallel bzw. gleichzeitig oder auch jeweils separat möglich.

Es ist bekannt, daß die pulsierende Verbrennung eine Verminderung der Schadstoffemissionen bewirken kann [14]. Die Erfindung kann deshalb auch genutzt werden, derartige Pulsationen in der Brennkammer durch die schwingende Kraftstoffzufuhr anzuregen. Damit stellt die Schadstoffminderung bei der Verbrennung ein weiteres Einsatzgebiet für den Aktuator dar.

Verbrennungsschwingungen oder -lärm können auch durch unregelmäßige Zufuhr des Kraftstoffs oder der Verbrennungsluft angeregt werden. Ein häufiger Fall dieser Zufuhrschwankungen betrifft die Kraftstofförderung durch die dazu eingesetzten Pumpen. Besonders gravierend wirken sich diese Schwankungen in der Zufuhr des Kraftstoffes bei Gasturbinenbrennkammern aus, da hierdurch in der nachgeschalteten Turbine die an sich schon hochbelasteten Turbinenschaufeln durch dynamische Kräfte zusätzlich belastet werden und deren Lebensdauer somit Förder- oder Zumeßeinrichtung erzeugten Druckschwankungen in der Krafstoffzufuhr auszuregeln. Selbstverständlich läßt sich diese Möglichkeit des Ausregelns von unenwünschten Druckschwankungen auch in anderen technischen Systemen einsetzen, bei denen mit Flüssigkeiten unter Druck manipuliert wird.

Weitere Anwendungsgebiete dieser Erfindung beziehen sich auf die Erzielung besonderer Effekte bei Geräten zur Zerstäubung von Flüssigkeiten. Ein sich zeitlich schnell ändernder Zerstäubungsdruck liefert aufgrund der Abhängigkeit von Tröpfchengrößenverteilung und Druck die Möglichkeit, die gewünschte Tröpfchengrößenverteilung einzustellen. Weitere gewünschte Effekte (z.B. spezielle Oberflächeneffekte bei der Lackierung) sind denkbar durch einen gezielt steuerbaren zeitlich sich ändernden Massenstrom. Auch für diese Aufgabe liefert der Aktuator eine mögliche Lösung.

Für hartnäckig festsitzende Verschmutzungen, Beschichtungen oder Ähnliches besteht die Aufgabe die Reinigungsbzw. Äblösungswirkung von Strahlreinigungsgeräten (z.B. Hochdruckreiniger) zu erhöhen. Durch das Erzeugen von Druckpulsationen vor der Austrittsdüse wird ein pulsierender Reinigungsstrahl erzielt. Dies ist mit der vorgestellten Erfindung möglich.

Erfindungsgemäß ist ein Aktuator zur Einfügung zwischen einer Düse und einer Fördereinrichtung mit einem Antriebselement zur Massenstrommodulation einer von der Fördereinrichtung zur Düse strömenden Flüssigkeit vorgesehen, wobei das Antriebselement eine Anordnung mit zumindest einem elektrostriktiven oder magnetostriktiven Bauteil ist, und dem Bauteil ein Kolben zur Übertragung einer von dem Bauteil erzeugten Stellkraft auf die Flüssigkeit zugeordnet ist. Weiterhin ist erfindungsgemäß eine Anordnung in einer Anlage zur Förderung einer Flüssigkeit von einer Fördereinrichtung zu einer Düse vorgesehen zum Ausgleich von Schwankungen eines Massenstroms der Flüssigkeit, welche Schwankungen von einer Pumpe verursacht werden. Bei einer weiteren erfindungsgemäßen Anordnung ist die Düse in einem Verbrennungssystem vorgesehen. Darüber hinaus ist erfindungsgemäß eine Verwendung des Aktuators in einer Anordnung vorgesehen, bei der die Flüssigkeit fein zerstäubt wird und ein aus der Düse austretender pulsierender scharfer Strahl mit hohem Impuls geformt wird.

Die Massenstrommodulation von Flüssigkeiten, die von einer Fördereinrichtung unter Druck zu einer Düse oder Drossel gefördert werden, läßt sich in einem Frequenzbereich von ca. 50 bis über 1000 Hz auf geeignet Weise erfindungsgemäß bewerkstelligen. Zur Modulation des Flüssigkeitsmassenstroms ist es notwendig, den Aktuator zwischen der Düse (z.B. Mittel zur Zerstäubung von Flüssigkeit) und der Fördereinrichtung zu montieren. Der Aktuator kann selbstverständlich auch von der Flüssigkeitsleitung zwischen Fördereinrichtung und Düse durch eine Leitung abgesetzt montiert sein.

Die erfindungsgemäßen Aufgaben werden durch den Einsatz von elektrostriktiven oder magnetostriktiven Elementen (weiterhin als Antriebselement bezeichnet) erreicht, die einen Kolben antreiben, der zwischen diesen und der Flüssigkeit liegt. Diese Antriebselemente ermöglichen hohe Stellkräfte bei hoher Dynamik. Der Kolben hat die Aufgabe, den Hub und die Stellkraft vom Antriebselement auf die Flüssigkeit zu übertragen. Das Gesamtsystem Aktuatorgehäuse, Aktuatorabschlußdeckel, Kolben und Antriebselement wird im weiteren als Aktuator bezeichnet. Die Wirkungsweise der Erfindung läßt sich wie folgt darstellen:

Durch ein Stellsignal U wird eine Ausdehnung h des Antriebselementes bewirkt. Bei dynamischen Änderungen dU/dt des Stellsignals U ergibt sich bei proportionaler Ausdehnung h des Antriebselementes zum Stellsignal U, eine Bewegung dh/dt des Kolbens gemäß

$$h \sim U \text{ bzw. } v = dh/dt \sim dU/dt.$$

Die Geschwindigkeit v des Kolbens ist gleich dh/dt. Durch die Kolbenstirnfläche A erhält man hieraus einen Volumenstrom $dV_{Kolben}/dt$, der durch die Kolbenbewegung hervorgerufen wird, gemäß

$$dV_{Kolben}/dt = A \cdot dh/dt \text{ bzw. } \Delta \dot{V}_{Kolben} = A \cdot v.$$

$$dV_{Kolben}/dt = A \cdot dh/dt \text{ bzw. } \Delta \dot{V}_{Kolben} = A \cdot v.$$

Bei inkompressiblen Medien, wie für Flüssigkeiten näherungsweise anzunehmen ist, ergibt sich der zusätzlich durch die Kolbenbewegung erzeugte Massenstrom $\Delta \dot{m}_{Kolben}$ zu:

$$\Delta \dot{m}_{Kolben} = \rho \cdot \Delta \dot{V}_{Kolben} = \rho \cdot A \cdot v$$

Der durch die Kolbenbewegung erzeugt Massenstrom $\Delta \dot{m}_{Kolben}$ überlagert sich dem von der Fördereinrichtung bzw. Massenstromregeleinrichtung vorgegebenen, zur Düse geförderten Massenstrom $\dot{m}_{Pumpe}$ als Massenstromschwankung bzw. -modulation. Der aus der Düse austretende Gesamtmassenstrom

$$\dot{m}_{Gesamt} = \dot{m}_{Pumpe} + \Delta \dot{m}_{Kolben}$$

Analog zur Massenstrommodulation $\Delta \dot{m}_{Kolben}$ wird dem von der Fördereinrichtung bzw. Massenstromregeleinrichtung vorgegebenen Druck p vor der Düse eine Druckschwankung $\Delta p$ überlagert. Die Erklärung hierfür ergibt sich aus dem Ausströmvorgang aus einer Düse, der sich näherungsweise mit folgender Gleichung beschreiben läßt [15]:

$$p \sim \dot{m}_{Gesamt}^2$$

Wird die Erfindung in einem Drucksystem eingesetzt, bei dem die Flüssigkeit von einer Pumpe gefördert wird und durch eine Düse ausströmt, lassen sich nach vorhergehender Beziehung mit dem Aktuator auch Druckschwankungen aufprägen. Bei einer Auslenkung des Antriebselementes um die Mittellage lassen sich sowohl positive als auch negative Massenstrom- bzw. Druckänderungen im Flüssigkeitsstrom erzeugen, wobei der mittlere Massenstrom, der von der Fördereinrichtung bzw. einer Massenstromregeleinrichtung vorgegeben wird, nicht beeinflußt wird. Beim Einsatz von elektro- und magnetostriktiven Elementen ist aufgrund der geringen Zugbelastbarkeit dafür Sorge zu tragen, daß das Antriebselement immer unter einer Druckvorspannung steht. Diese Vorspannung wird üblicherweise durch Federelemente erzeugt. Bei dem Aktuator gemäß der Erfindung kann dieses Element entfallen, wenn ein genügend hoher Flüssigkeitsdruck im System vorhanden ist, der die Druckvorspannung auf das Antriebselement über den Kolben aufprägt. Der Wegfall von Federelementen zur Vorspannung der Antriebselemente stellt eine wesentliche vorteilhafte Wirkung der Erfindung dar, da Federelemente selbst je nach Federkonstante eine Resonanzfrequenz besitzen, oberhalb der die Druckvorspannung des Antriebselementes nicht mehr gesichert ist. Da bei einem Aktuator gemäß Erfindung keine Federelemente notwendig sind, lassen sich mit diesem wesentlich höhere Modulationsfrequenzen erreichen.

Durch geeignete Abstimmung der Rohrleitungslänge (zwischen Fördereinrichtung und Aktuator oder Aktuator und Düse) oder Veränderung der akustischen Abschlußbedingungen an der Förder- bzw. Zumeßeinrichtung oder/und der Düse ist es möglich, den Frequenzgang des Aktuators gezielt zu verbessern, indem die akustische Rohrleitungseigenfrequenz angeregt wird und damit der Leitungsresonanzeffekt genutzt wird.

Ein erfindungsgemäßer Flüssigkeitsaktuator weist verschiedene weitere Vorteile auf. Aufgrund des einfachen und kompakten Aufbaus ist zum einen eine leichte Implementierung in die Förderleitung möglich und zum anderen aufgrund der wenigen bewegten Teile eine große Störungsunempfindlichkeit gewährleistet. Die Verwendung von elektrostriktiven oder magnetostriktiven Bauteilen als Antriebselement für die Modulationskolben erschließt einen großen Frequenzbereich, in dem die Erfindung eingesetzt werden kann. Aufgrund der Funktionsweise des Aktuators ist es nicht notwendig, bei der Massenstrom- bzw. Druckmodulation der Flüssigkeit einen Strömungsquerschnitt definiert zu verändern, wie es bei allen ventilbasierenden Konstruktionen unabdingbar ist. Bei diesen Systemen haben Temperaturschwankungen einen starken Einfluß auf die Funktionsweise, insbesondere wenn als Antrieb magneto- oder elektrostriktive Elemente eingesetzt werden, da diese nur sehr kleine Stellwege ermöglichen, die meist in derselben Größenordnung wie die Temperaturdehnungen des Gehäuses sind. Aus diesem Grund ist der Aktuator, der gemäß der Erfindung die Massenstrom- bzw. Druckmodulation ohne definierte Querschnittsänderung bewirkt, in seiner Funktionsweise praktisch unabhängig von Temperaturschwankungen.

Die oben beschriebenen vorteilhaften Eigenschaften führen dazu, daß auf dem Gebiet der aktiven Unterdrückung von Brennkammerschwingungen neben niederfrequenten Verbrennungsinstabilitäten auch hochfrequente Oszillationen gedämpft werden können. Sowohl die Dämpfung von selbsterregten, aufgrund von Rückkopplungseffekten zwischen Verbrennung und Brennkammerakustik verursachten Brennkammerschwingungen als auch von fremderregten Verbrennungsschwingungen, die z.B. durch unstetig arbeitende Fördereinrichtungen hervorgerufen werden, ist möglich. Neben der Einsatzmöglichkeit der Erfindung als Stellglied zum aktiven Dämpfen von Verbrennungsschwingungen eignet sich diese auch als Aktuator zur externen Anregung der Verbrennung, um eine Schadstoffreduktion zu bewirken. Hierbei ist es möglich den Aktuator extern zur Schadstoffminderung anzusteuern und gleichzeitig diesen als Stellglied zur aktiven Regelung von eventuell auftretenden Verbrennungsschwingungen heranzuziehen. Hierzu werden die beiden Ansteuersignale einfach überlagert und dem Aktuator zugeführt.

Oft reicht die ablösende Wirkung des Flüssigkeitsstrahles von Reinigungsgeräten (z.B. Hochdruckreiniger) nicht aus, um fest haftende Verschmutzungen oder alte Oberflächenbeschichtungen zu entfernen. In solchen Fällen läßt sich die schmutzlösende Wirkung durch einen pulsierenden Reinigungsstrahl wesentlich verbessern. Mit dem erfindungsgemäßen Aktuator läßt sich ein pulsierender Reinigungsstrahl erzeugen, wobei die Pulsationsintensität und -frequenz in weiten Bereichen einstellbar sind und somit dem jeweiligen Reinigungsproblem angepaßt werden können.

Im folgenden wird die Erfindung mit weiteren Merkmalen und Vorteilen anhand der Beschreibung und durch Zeichnungen näher erläutert.

ABBILDUNG 1 zeigt eine mögliche Ausführungsform der Erfindung in einer Prinzipskizze mit den wichtigsten Bauteilen, wobei das Antriebselement aus einem elektrostriktiven oder magnetostriktiven Bauteil bestehen kann.

ABBILDUNG 2 zeigt die Erfindung in ein Flüssigkeitssystem integriert, wobei diese durch Leitungen von der Fördereinrichtung und Düsenkopf getrennt ist.

ABBILDUNG 3a zeigt exemplarisch zwei Frequenzgänge des Einspritzdrucks der Erfindung für zwei unterschiedliche Rohrleitungslängen und bei Verwendung der gleichen Flüssigkeit (hier Dieselkraftstoff).

ABBILDUNG 3b zeigt die entsprechenden Frequenzgänge der Auswirkung der Treibstoffmodulation auf die Verbrennung, um die Qualität des Aktuators als Stellglied zur Beeinflussung des Massenstromes bzw. der Verbrennung für die aktive Regelung aufzuzeigen.

ABBILDUNG 4 zeigt den Verlauf der Frequenzmaxima verschiedener Ordnungen über die Rohrleitungslänge aufgetragen (zwei Frequenzmaxima erster Ordnung sind in Abbildung 3a für zwei Rohrleitungslängen dargestellt).

ABBILDUNG 5 ist ein möglicher Aufbau des Aktuators zum aktiven Unterdrücken von Druckschwankungen in Flüssigkeitsfördersystemen.

ABBILDUNG 6 ist ein möglicher Aufbau des Aktuators zum aktiven Unterdrücken von Verbrennungsinstabilitäten und/oder aktiven Ausregeln von Druckschwankungen im Kraftstofffördersystem.

ABBILDUNG 7a zeigt ein erstes Ergebnis der experimentellen Untersuchungen, zur Unterdrückung von Verbrennungsinstabilitäten bei einem 36 kW Dieselkraftstoffbrenner, mit dem erfindungsgemäßen Aktuator. Aufgetragen ist der Brennkammerschalldruck mit aktiver Kontrolle 41 und ohne aktive Kontrolle 40 der Verbrennung.

ABBILDUNG 7b zeigt die Beträge der Frequenzspektren der Signale 7a mit aktiver Kontrolle 43 und ohne aktive Kontrolle 42 der Verbrennung.

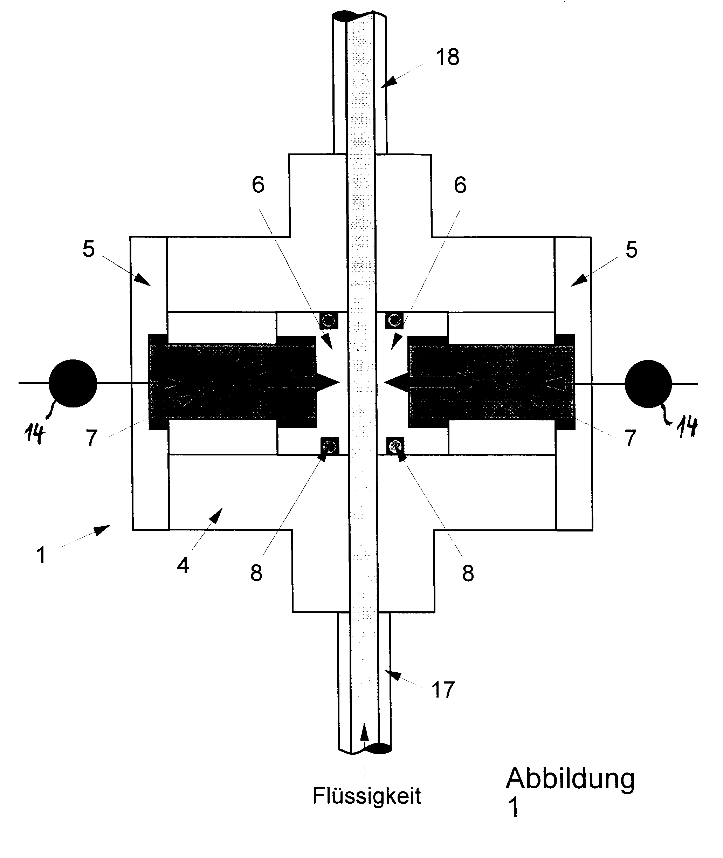

Die Bauteile 4 bis 8 in **Abbildung 1** stellen das bisher mit Aktuator 1 bezeichnete Stellglied dar. Die Flüssigkeit wird dem Aktuator 1 durch eine Leitung 17 zugeführt. Im Aktuatorgehäuse 4 wird der Flüssigkeit eine Druck- bzw. zeitliche Massenstromänderung durch, in diesem Fall, zwei Kolben 6 aufgeprägt. Durch den Kolben 6 wird die notwendige Trennung und Abdichtung zwischen der Flüssigkeit und dem Antriebselement sichergestellt. Die Kolben 6 werden ihrerseits von zwei Antriebselementen 7 angetrieben, welche entweder elektrostriktive oder magnetostriktive Bauelemente sein können. Die Auslenkung bzw. Länge der Antriebselemente 7 wird durch das Stellsignal 14 gesteuert. Die Antriebselemente 7 stützen sich zur Kraftaufbringung auf die Kolben 6 an den Gehäusedeckeln 5 ab. Die notwendige Rückstellkraft für die Kolben 6 wird durch den Flüssigkeitsdruck aufgebracht. Die Kolben 6 haben die Aufgabe, die Massenstrommodulation durch Vergrößerung oder Verkleinerung ihrer Stirnfläche im Vergleich zu den Stirnflächen der Antriebselementen 7 zu erhöhen oder zu verringern. Die Verwendung von zwei oder mehr Kolben 6 und Antriebselementen 7 ist nicht notwendig, jedoch kann mit der Anzahl an Kolben 6 und Antriebselementen 7 die Leistung des Aktuators 1 gesteigert werden. Im gleichen Sinne können natürlich auch mehrere Aktuatoren 1 in der Flüssigkeitsleitung plaziert werden. Bei mehreren Kolben 6 und Antriebselementen 7 ist auf die richtige Ansteuerung 14 dieser zu achten, die Längenänderung der Antriebselemente 7 hat dabei in gleicher Weise (positive Dehnung bzw. negative Dehnung) zu erfolgen.

Die Form des Kolbens 6, des Zylinders im Aktuatorgehäuse 4 und des Antriebselementes 7 sollen vorzugsweise zylindrisch ausgeführt werden. Die Form der Kolbenstirnfläche, die der Flüssigkeit zugewandten ist, kann verschiedene Geometrien aufweisen. Eine Befestigung der Antriebselemente 7 am Aktuatorabschlußdeckel 5 und am Kolben 6 ist nicht notwendig, da das Antriebselement 7 nur Druckkräfte zu übertragen hat. Das Antriebselement wird durch eine geeignete Passung im Kolben 6 und im Aktuatorabschlußdeckel 5 zentriert, geführt und gegen ein Verkippen der Antriebselemente 7 gegenüber den Kolben 6 und Aktuatorgehäusedeckeln 5 geschützt. Das Aktuatorgehäuse 4, die Aktuatorabschlußdeckel 5 und die Kolben 6 sind möglichst steif auszuführen, um mögliche Verformungen aufgrund der hohen Stellkräfte der Antriebselemente 7 bzw. Drücke der Flüssigkeiten auf die Kolben 6 und das Aktuatorgehäuse 4 zu minimieren, da ansonsten der effektiv nutzbare Stellweg der Antriebselemente 7 verringert würde. Die Verbindung zwischen dem Aktuatorgehäuse 4 und dem Aktuatorabschlußdeckel 5 ist mit den bekannten Methoden, wie z.B. Schrauben, Nieten, Löten, Schweißen usw., ebenfalls möglichst steif auszuführen. Für die Funktion ist es förderlich auf eine genaue Zentrierung folgender Bauteile zu achten: Aktuatorgehäuse 4, Aktuatorabschlußdeckel 5, Kolben 6 und Antriebselemente 7. Die Flüssigkeitsförderleitungen 17 und 18 sind aus den vorgenannten Gründen ebenfalls möglichst steif auszuführen, z.B. Kupfer- oder Stahlrohrleitungen, keine Kunststoff- oder Gummischläuche. Die Verbindung der Flüssigkeitsförderleitungen 17 und 18 sind mit den bekannten Methoden, wie z.B. Schneidringverschraubungen, Rohrgewinde, Löten, Schweißen usw., am Aktuatorgehäuse 4 anzubringen.

Die Abdichtung zwischen dem Kolben 6 und seiner Führung bzw. dem Zylinder im Aktuatorgehäuse 4 wird mittels bekannter Methoden zur Abdichtung, z.B. O-Ring 8, bewerkstelligt. Ein Verschleiß der Dichtungsbauteile durch das Bewegen der Kolben 6 ist auszuschließen, da die Kolben 6 keine nennenswerten Hübe aufgrund der geringen Stellwege der Antriebselemente 7 ausführen.

Der Stellweg des Antriebselementes 7 kann über einen auf ihm angebrachten Dehnmeßstreifen (DMS) überwacht werden und wird im weiteren als Überwachungssignal bezeichnet. Das Überwachungssignal vom DMS kann als Eingangssignal für einen Regler 31 oder 39 dienen. Die Durchführung der Überwachungs- und Stellsignalleitungen 14 für das Antriebselement 7 kann durch das Aktuatorgehäuse 4 oder durch den Aktuatorabschlußdeckel 5 oder zwischen beiden erfolgen und muß nicht zwingend abgedichtet sein. Eine leichtere Montage und Demontage wird erreicht, wenn die Überwachungs- und Stellsignalleitungen 14 zwischen Aktuatorgehäuse 4 und Aktuatorabschlußdeckel 5, z.B. in einer Nut, durchgeführt werden.

Durch Verlustleistung kann es zu einer Erwärmung der Antriebselemente 7 kommen, wodurch deren Lebensdauer beeinträchtigt werden kann. Aus diesem Grund ist es möglich die Antriebselemente durch Spülen mit einem geeigneten Medium, z.B. Luft, zu kühlen. Das Kühlmedium kann in geeigneter Weise durch Öffnungen, z.B. Bohrungen, im Aktuatorgehäuse 4 und/oder Aktuatorabschlußdeckel 5 zu- und abgeführt werden.

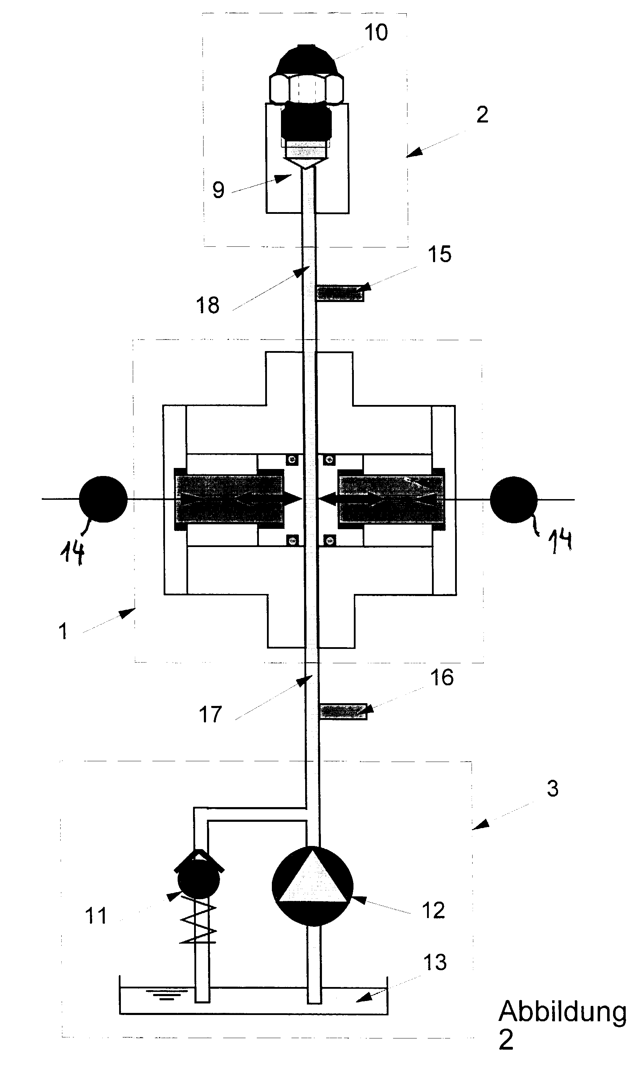

Die Integration des Aktuators 1 in das Fördersystem wird beispielhaft in **Abbildung 2** erläutert. Die Montage des Düsenkopfes 2 kann direkt am Aktuatorgehäuse 4 oder durch eine Leitung 18 von diesem getrennt erfolgen. Das gleiche gilt für die Fördereinrichtung 3. Weitere im Fördersystem integrierte Bauteile, wie z. B. Massenstromregel-, Rückschlag- und Überdruckventile sind für die Funktionsweise des Aktuators 1 nicht hinderlich, beeinflussen aber eventuell den nutzbaren Frequenzbereich. Um die Funktionsweise der Erfindung sicherzustellen, ist die Flüssigkeit möglichst gas- bzw. luftfrei zu fördern. Zudem ist die Konstruktion des gesamten Fördersystems so auszuführen, daß im System enthaltene Gas- bzw. Luftblasen automatisch bei der Inbetriebnahme über die Düse ausgetragen werden. Ist dies nicht gewährleistet, so müssen an kritischen Stellen des Fördersystems Entlüftungsmöglichkeiten vorgesehen werden. Zur Überwachung des Flüssigkeitsdrucks vor bzw. nach dem Aktuator können in die Förderleitung 17,18 Druckwandlermittel 15,16 eingesetzt werden. Der Drucksensor 15 dient dazu, die Qualität der zu erzielenden Druckmodulation zu messen und liefert damit indirekt ein Maß für die Massenstrommodulation.

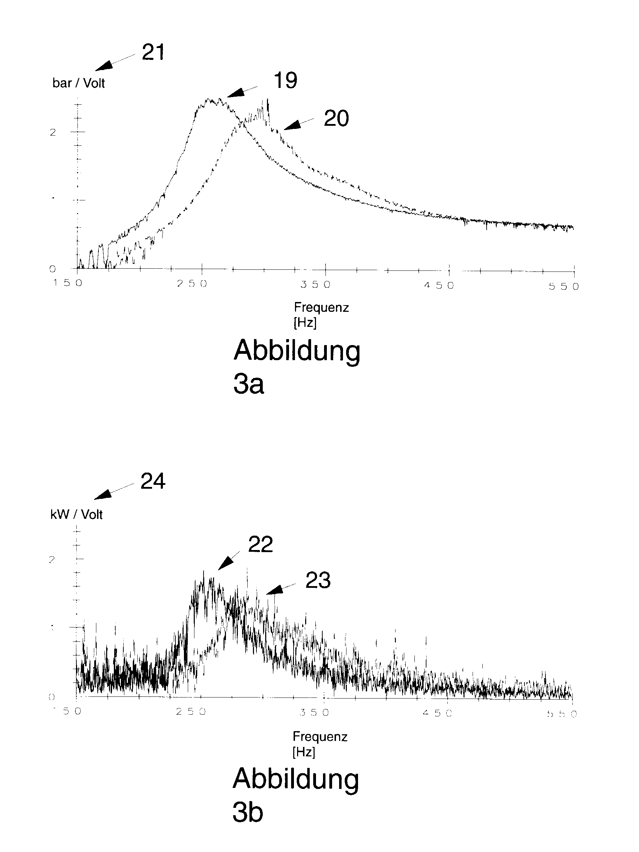

Regt man mit dem Aktuator 1 die akustische Eigenfrequenz der Flüssigkeit im Fördersystem an, das aus der Fördereinrichtung 3, den Flüssigkeitsförderleitungen 17 und 18, dem Aktuator 1 und dem Düsenkopf 2 besteht, erhält man einen ausgeprägten Resonanzpeak, der im weiteren als Rohrleitungsresonanz bezeichnet wird. In **Abbildung 3a** sind exemplarisch die Übertragungsfunktionen 19 und 20 des Einspritzdruckes 30 bezogen auf das unverstärkte Aktuator-Stellsignal 14 für zwei verschiedene Rohrleitungslängen 17 aufgetragen, wobei als Flüssigkeit Dieselkraftstoff eingesetzt wurde. Die Methode der Anregung der Rohrleitungsresonanz läßt sich dazu nutzen, um in einem bestimmten Frequenzbereich gezielt eine Verbesserung des Übertragungsverhaltens zu bekommen. Die Rohrleitungsresonanz läßt sich durch die Anordnung der verschiedenen Elemente des Fördersystems sowie die Längen der Flüssigkeitsförderleitungen 17 und 18 und diverse Einbauten z.B. Rückschlagventil, Massenstromregelventil usw. beeinflussen. Hierzu lassen sich neben den Maxima erster Ordnung auch die höherer Ordnung verwenden. Eine Ausweitung bzw. Veränderung des Übertragungsverhaltens (Einspritzdruck 30 bezogen auf unverstärktes Aktuator-Stellsignal 14) während des Betriebs, im Sinn der eben beschriebenen Methode, ist z.B. durch variable im Betrieb abstimmbare Längen der Flüssigkeitsförderleitungen 17 und 18 möglich.

Um die Einflußmöglichkeit des Aktuators auf die Verbrennung zu zeigen, wurde in der **Abbildung 3b** entsprechend Abbildung 3a die Auswirkung der Anregung auf die Flamme in der Frequenzgangdarstellung mit aufgezeichnet. Die zeitliche Leistungsfreisetzung der Verbrennung wurde hierbei mit einem Photomultiplier 36 anhand der Strahlung des OH-Radikals gemessen. Aus dem Verlauf ist zu entnehmen, daß der Aktuator 1 ein erhebliches Potential zur Beeinflussung der Verbrennung und damit zum aktiven Unterdrücken von Verbrennungsschwingungen besitzt. Aufgrund der Tatsache, daß der Resonanzpeak sich durch die Rohrleitungslänge variieren und damit der Frequenzbereich verstellen läßt, ist dieses Stellglied für die Ausregelung von nieder- und hochfrequenten Verbrennungsinstabilitäten geeignet. Ein Aktuator mit diesen Leistungsdaten ist bis dato nicht bekannt.

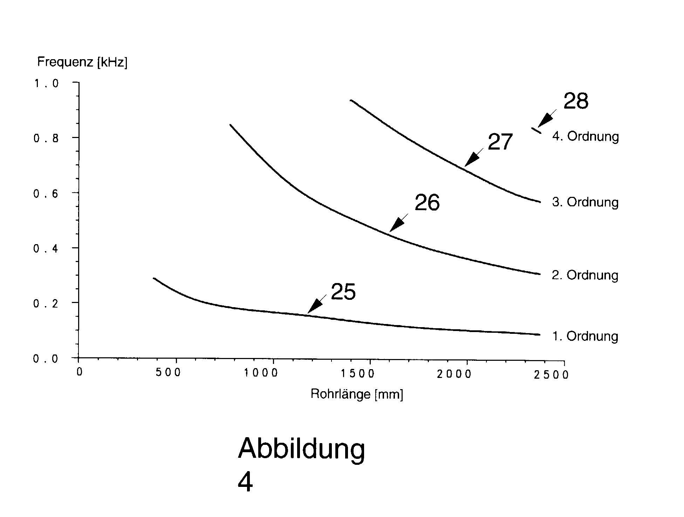

In der **Abbildung 4** ist der Verlauf der Frequenzmaxima des Übertragungsverhaltens des Einspritzdruckes 30 bezogen auf das unverstärkte Aktuator-Stellsignal 14 erster Ordnung 25, zweiter Ordnung 26, dritter Ordnung 27 und vierter Ordnung 28 über der Länge der Flüssigkeitsförderleitung 17 aufgetragen. Aufgrund der akustischen Resonanzbedingung von Rohrleitungen erhält man hier Hyperbeln. Wegen der noch nicht näher bestimmten Abschlußbedingung an der Fördereinrichtung 3 und der Düse 2, ist eine genaue Modellierung (Beschreibung durch Wellenform) bisher nicht möglich.

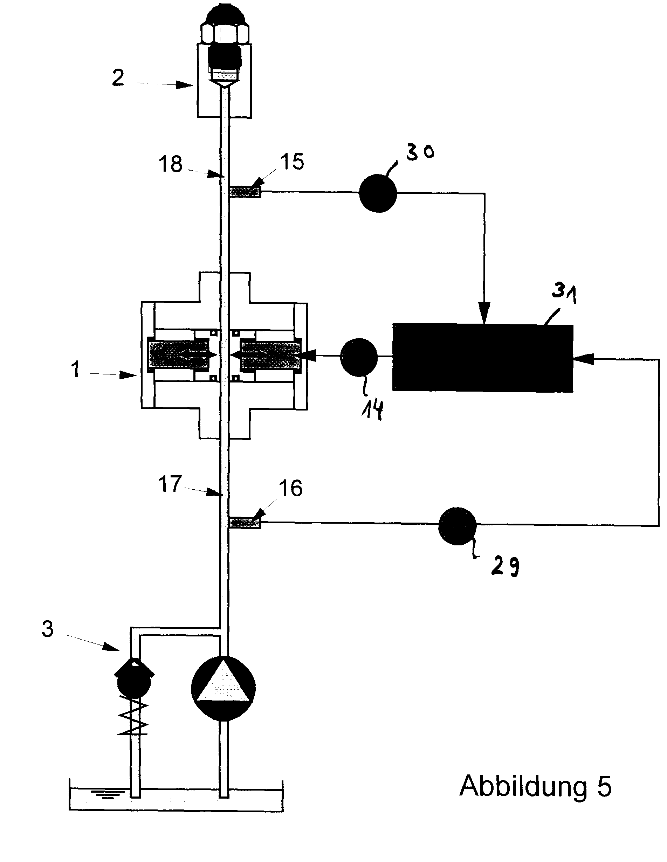

Druck- bzw. Massenstromschwankungen, die von Förder- oder Zumeßeinrichtungen erzeugt werden, lassen sich durch eine Anordnung gemäß **Abbildung 5** ausregeln. Durch ein Druckwandlermittel 16 werden die durch die Förder- oder Zumeßeinrichtungen erzeugten Druckschwankungen gemessen und einem Regler 31 als Eingangssignal 29 zugeführt. Der Regler 31 erzeugt hieraus ein Aktuator-Stellsignal 14, das so gestaltet sein muß, daß die Druckschwankungen im Fördersystem durch destruktive Interferenz mit den durch den Aktuator 1 erzeugten Druckschwankungen ausgelöscht werden. Der Regler kann z.B. aus einem Filter, Phasenschieber und Verstärker oder aus einem adaptiven Filter etc. bestehen. Die Qualität der Auslöschung der Druckschwankungen im Fördersystem kann mit dem Druckwandlermittel 15 gemessen werden. Dieses Signal kann als Reglereingangssignal 30 zur Optimierung des Regelverhaltens des Reglers 31 verwendet werden.

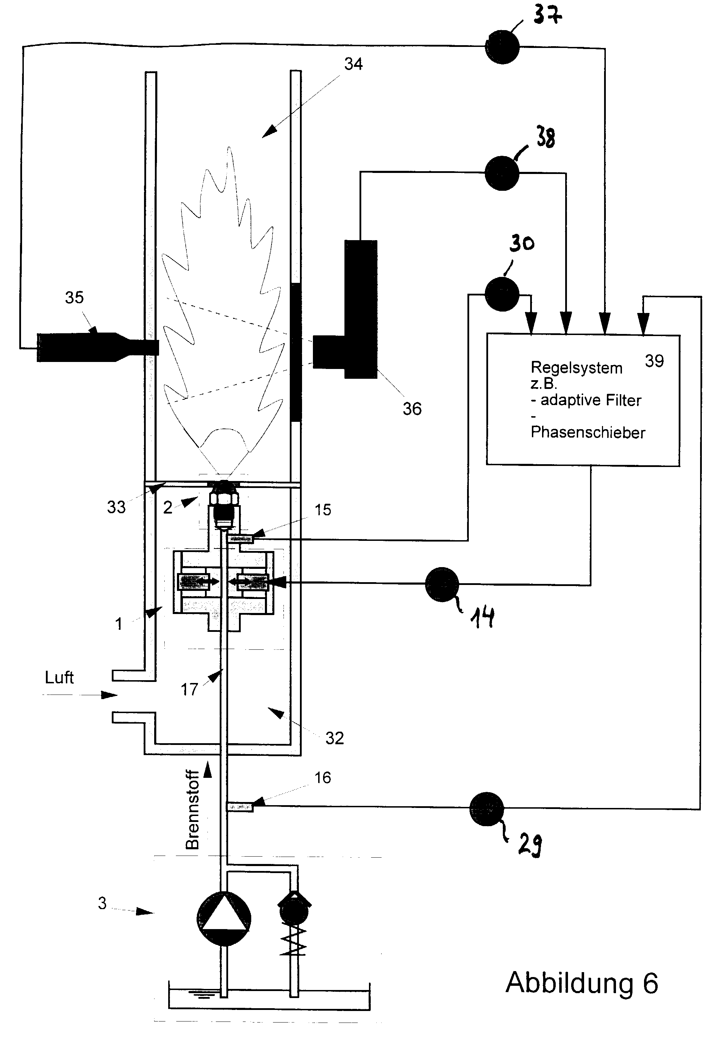

**Abbildung 6** zeigt einen möglichen Aufbau zur aktiven Unterdrückung von Verbrennungsschwingungen mit dem erfindungsgemäßen Aktuator 1. In diesem Fall sind der Düsenkopf 2 sowie das Druckwandlermittel 15 direkt am Aktuator 1 angebaut. Dem Reglersystem 39 - das entweder aus einem adaptiven Filter, einem Phasenschieber mit Verstärker oder ähnlichem bestehen kann - wird als Eingangsgröße der Schalldruck 37 und/oder die Verbrennungsleistung 38 zugeführt. Eine Korrektur des Aktuator-Stellsignals 14 hinsichtlich Abweichungen, die auf das Übertragungsverhalten des Aktuators zurückzuführen sind, ist durch Einleitung des Einspritzdrucksignals 30 in das Reglersystem möglich. Der Einspritzdruck wird mittels eines Druckwandlermittels 15 im Aktuatorgehäuse 4 bzw. kurz vor dem Düsenkopf 2 gemessen. Aus diesen Signalen (30, 37, 38) ermittelt der Regler 39 ein Stellsignal 14, das dem Aktuator 1 zur Unterdrückung der Verbrennungsschwingung zugeführt wird. Aufgabe des Reglersystems 39 ist es, den Aktuator 1 so anzusteuern, daß die Verbrennungsschwingung durch antizyklische Brennstoffzufuhr - bezogen zur Leistungsschwankung der Verbrennung bzw. zur Schalldruckschwingung in der Brennkammer - unterdrückt wird.

Mit der gleichen Anordnung lassen sich im Fördersystem auch Brennstoffdruckschwankungen ausregeln, die andernfalls zu fremderregten Verbrennungsschwingungen führen würden. Ein Ausführungsbeispiel für die Ausregelung dieser Brennstoffdruckschwankungen ist in Abbildung 5 gegeben. In Ergänzung zu Abbildung 5 zeigt Abbildung 6, daß das aktive Unterdrücken von selbsterregten Verbrennungsschwingungen und das Ausregeln von Brennstoffdruckschwankungen mit einem kombinierten Reglersystem 39 möglich ist.

Erste experimentelle Untersuchungen zur Unterdrückung von selbsterregten Verbrennungsschwingungen nach dem Aufbau gemäß **Abbildung 6** haben gezeigt, daß Dämpfungen von bis zu 40 dB unter Verwendung des Aktuators 1 in einem Ölzerstäuberbrenner mit 36 kW thermischer Leistung möglich sind. Das Reglersystem 39 bestand hierbei aus einem Filter zum Unterdrücken von Rauschen, einem analogen Phasenschieber zum Phasenverschieben des Eingangssignals und einem Verstärker zur Ansteuerung des Aktuators 1. Diesem Reglersystem 39 wurde als Eingangs-

EP 0 601 608 B1

signal die Leistungsschwankung 38 der Verbrennung zugeführt, hier phasenverschoben und verstärkt und anschließend dem Aktuator 1 als Stellsignal 14 zugeführt. Die Phasenverschiebung wurde dabei so gewählt, daß es durch antizyklische Kraftstoffeinspritzung - bezogen zur Leistungsschwingung der Verbrennung in der Brennkammer - zu einer Unterdrückung der Verbrennungsschwingung kam.

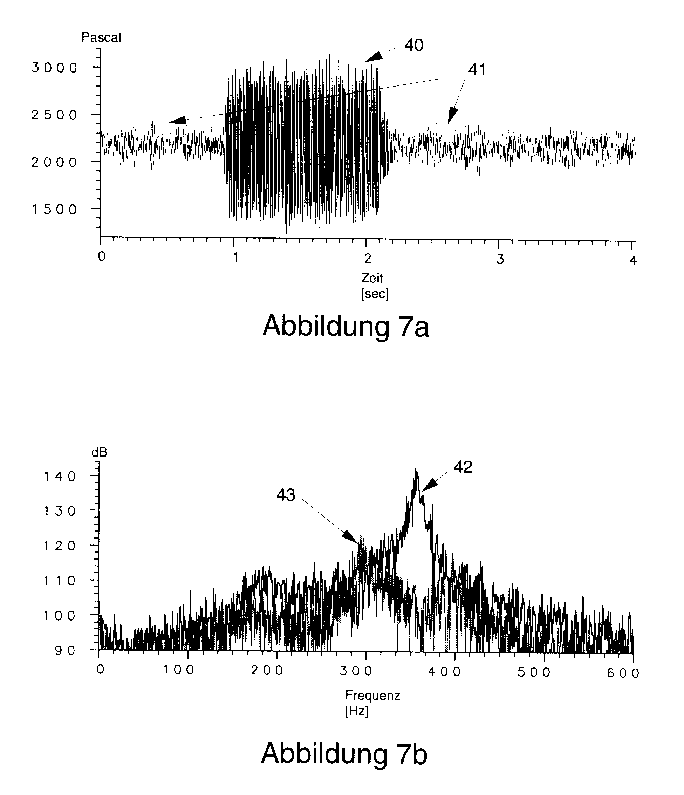

Um die Qualität der aktiven Regelung zu belegen, wurde das Brennkammerdrucksignal 37 mit aktiver Unterdrückung 41 und ohne aktive Unterdrückung 40 aufgezeichnet und in **Abbildung 7a** aufgetragen. Die Frequenzanalysen mit aktiver Unterdrückung 43 und ohne aktive Unterdrückung 42, der Signalabschnitte 40 und 41 wurden in Dezibel in **Abbildung 7b** aufgetragen.

## LITERATURVERZEICHNIS

1, Gulati, A.; Bigelow, E. C.: Patent: Aktive Regelung von durch Verbrennung hervorgerufene Instabilitäten. DE 40 40 745 A1. Anmelder: General Electric.

2, Schlagmüller, W.: Patent: Zumeßventil zur Dosierung von Flüssigkeiten oder Gasen. Aktenzeichen: DE 3533975. Anmelder: Robert Bosch GmbH.

3, Rayleigh, J.: The Explanation of Certain Acoustical Phenomena. Nature, July 18, 1878, p. 319-321.

4, Gleis, S.; Rau, W.; Vortmeyer, D.: Beruhigung von Verbrennungsschwingungen im Prozeßgaserhitzer einer Claus-Abgasreinigungsanlage - Eine Fallstudie. 15. Deutscher Flammentag, Bochum, 17. und 18. Sept. 1991, VDI-Bericht Nr. 922, 1991, p. 337-347.

5, Lang, W.; Poinsot, T.; Candel, S.: Active control of combustion instability. Combustion and Flame (ISSN 0010-2180), vol. 70, Dec. 1987, p. 281-289.

6, Poinsot, T.; Veynante, D.; Bourienne, F.; Candel, S. and Esposito, E.: Initiation and suppression of combustion instabilities by active control. Symposium (International) on Combustion, 22nd, Seattle, WA, Aug. 14-19, 1988. Proceedings (A90-32801 13-25), Pittsburgh, PA,Combustion Institute, 1989, p. 1363-1369.

7, Gutmark, E. C.; Parr, T. P.; Hanson-Parr, D. M.; Schadow, K. C.: Active Control of a Premixed Flame. AIAA-Paper 90-2448, Joint Propulsion Conference, 26th, Orlando, FL, July 16-18, 1990.

8, Williams, J. E. F.; Dines, P. J. A; Heckl, M. A.; Patent: Verbrennungssystem für ein Gasturbinentriebwerk. DE 34 39.903 A1. Anmelder: Williams et al 9, Bloxsidge, G. J.; Dowling, A. P.; Hooper N.; Langhorne, P. J.: Active Control of Rehaet Buzz. AIAA-Paper 87-0433, Aerospace Sciences Meeting, 25th, Reno, NV, Jan. 12-15, 1987.

10, Billoud, G.; Huynh huu C.; Galland M. A.; Candel S.: Adaptive Active Control of Combustion Instabilities. Submitted for puplication to Combustion Science and Technology, Aug. 1990. Revised version Dec. 1990.

11, Langhorne, P. J.; Dowling, A. P.; Hooper, N.: Practical Active Control System for Combustion Oscillations. Jornal of Propulsion and Power (ISSN 0748-4658), vol. 6, May-June 1990, p. 324-333.

12, Tsien, H. S.: Servo-Stabilization of Combustion in Rocket Motors. Journal of the American Rocket Society, Sept.-Oct. 1952, p. 256-268.

13, Candel, S. M.: Combustion Instabilities Coupled by Pressure Waves and their Active Control. Invited general lecture, 24th Symposium (International) on Combustion, Sydney, July 1992.

14, Keller, J. O.; Hongo, I.: Pulse Combustion the Mechanisms of $NO_x$ Production. Combustion and Flame 1990, Vol. 80, p. 219 - 237.

15, Beedgen, O.: Öl- und Gasfeuerungstechnik. 2. Auflage, Werner-Verlag 1984, p. 235-236.

**VERZEICHNIS DER VERWENDETEN FORMELZEICHEN**

| | |
|---|---|
| A | Kolbenstirnfläche |
| h | Ausdehnung des Antriebselementes |
| $\dot{m}_{Gesamt}$ | aus der Düse austretender Gesamtmassenstrom |
| $\dot{m}_{Pumpe}$ | von der Förder- bzw. Massenstromregeleinrichtung vorgegebener Massenstrom |
| p | von der Förder- bzw. Massenstromregeleinrichtung vorgegebener Druck |
| t | Zeit |
| U | Aktuator-Stellsignal |
| v | Geschwindigkeit des Kolbens |
| V | Volumen |
| $\Delta\dot{m}_{Kolben}$ | durch die Kolbenbewegung erzeugter Massenstrom |
| $\Delta p$ | vom Aktuator erzeugte Druckschwankung |
| $\Delta V_{Kolben}$ | durch die Kolbenbewegung erzeugter Volumenstrom |
| $\rho$ | Dichte der Flüssigkeit |

8

**LEGENDE ZU DEN ABBILDUNGEN 1 BIS 7**

1, Aktuator bestehend aus den Teilen 4 bis 8

2, Düsenkopf bestehend aus den Teilen 9 und 10

3, Flüssigkeitsfördereinrichtung bestehend aus den Teilen 11 bis 13

4, Aktuatorgehäuse

5, Aktuatorabschlußdeckel

6, Kolben

7, Antriebselement (hier im speziellen Piezoelement)

8, Dichtungselement (hier im speziellen O-Ring)

9, Düsen- bzw. Drosselgehäuse

10, Düse bzw. Drossel

11, Überdruck- bzw. Überströmventil

12, Druckerhöhungspumpe

13, Tank

14, Stellsignal für das Antriebselement des Aktuators

15, Druckwandlermittel (hier im speziellen Piezodruckaufnehmer) zur Erfassung des Flüssigkeitsdruckes zwischen Aktuator 1 und Düsenkopf 2

16, Druckwandlermittel (hier im speziellen Piezodruckaufnehmer) zur Erfassung des Flüssigkeitsdruckes zwischen Flüssigkeitsfördereinrichtung 3 und Aktuator 1

17, Flüssigkeitsförderleitung zwischen Flüssigkeitsfördereinrichtung 3 und Aktuator 1

18, Flüssigkeitsförderleitung zwischen Aktuator 1 und Düsenkopf 2

19, Übertragungsfunktion des Einspritzdruckes 30 bezogen auf das unverstärkte Aktuator-Stellsignal 14 bei Rohrleitungslänge 470 mm

20, Übertragungsfunktion des Einspritzdruckes 30 bezogen auf das unverstärkte Aktuator-Stellsignal 14 bei Rohrleitungslänge 380 mm

21, Abszisse mit der Einheit [bar/Volt], Einspritzdruck 30 [bar] (gemessen durch Druckwandlermittel 15) bezogen auf das unverstärkte Aktuator-Stellsignal 14 [Volt].

22, Übertragungsfunktion der Verbrennungsleistung 38 bezogen auf das unverstärkte Aktuator-Stellsignal 14 bei Rohrleitungslänge 470 mm

23, Übertragungsfunktion der Verbrennungsleistung 38 bezogen auf das unverstärkte Aktuator-Stellsignal 14 bei Rohrleitungslänge 380 mm

24, Abszisse mit der Einheit [kW/Volt], Verbrennungsleistung 38 in [kW] (gemessen durch Photomultiplier 36) bezogen auf das unverstärkte Aktuator-Stellsignal 14 [Volt].

25, Verlauf der Frequenzmaxima 1. Ordnung in Abhängigkeit von der Rohrleitungslänge

26, Verlauf der Frequenzmaxima 2. Ordnung in Abhängigkeit von der Rohrleitungslänge

27, Verlauf der Frequenzmaxima 3. Ordnung in Abhängigkeit von der Rohrleitungslänge

28, Verlauf der Frequenzmaxima 4. Ordnung in Abhängigkeit von der Rohrleitungslänge

29, Reglereingangssignal - Flüssigkeitsdruck zwischen Flüssigkeitsfördereinrichtung 3 und Aktuator 1

30, Reglereingangssignal - Flüssigkeitsdruck zwischen Aktuator 1 und Düsenkopf 2

31, Regler zur Unterdrückung von Druckschwankungen in der Flüssigkeitsförderleitung.

32, Luftverteilergehäuse

33, Flammhalter bzw. Stauscheibe

34, Brennkammer

35, Druckwandlermittel (hier im speziellen Kondensatormikrophon) zur Erfassung der Brennkammerdruckschwingung

36, optischer Sensor (hier im speziellen Photomultiplier) zur Erfassung der Verbrennungsleistung

37, Reglereingangssignal - Brennkammerdruckschwingung

38, Reglereingangssignal - Verbrennungsleistung

39, Regler zur Unterdrückung von selbst- oder/und fremderregten Verbrennungsschwingungen

40, Brennkammerdrucksignal 37 einer selbsterregten Verbrennungsschwingung

41, Brennkammerdrucksignal 37 einer selbsterregten Verbrennungsschwingung, die mit Hilfe des Aktuators 1 und eines Reglers 39 gedämpft wurde

42, Frequenzspektrum von 40

43, Frequenzspektrum von 41

**Patentansprüche**

1. Aktuator (1) zur Einfügung zwischen einer Düse (2,10) und einer Fördereinrichtung (3) mit einem Antriebselement zur Massenstrommodulation einer von der Fördereinrichtung (3) zur Düse (2,10) strömenden Flüssigkeit, **dadurch gekennzeichnet**, daß das Antriebselement eine Anordnung mit zumindest einem elektrostriktiven oder magnetostriktiven Bauteil (7) ist, wobei dem Bauteil (7) ein Kolben (6) zur Übertragung einer von dem Bauteil (7) erzeugten Stellkraft auf die Flüssigkeit zugeordnet ist.

2. Aktuator (1) nach Anspruch 1, bei dem der Kolben (6) eine eine von der Flüssigkeit beaufschlagbare Stirnfläche und das Bauteil (7) eine an den Kolben (6) anliegende Stirnfläche aufweist, wobei die von der Flüssigkeit beaufschlagbare Stirnfläche des Kolbens (6) größer als die an dem Kolben (6) anliegende Stirnfläche des Bauteils (7) ist.

3. Aktuator (1) nach Anspruch 1 oder 2, bei dem das Antriebselement mehrere elektrostriktive oder magnetostriktive Bauteile (7) enthält, wobei jedem Bauteil ein zugehöriger Kolben (6) zugeordnet ist.

4. Anordnung in einer Anlage zur Förderung einer Flüssigkeit von einer Fördereinrichtung (3) zu einer Düse (2,10), welche Anordnung eine zwischen die Fördereinrichtung (3) und die Düse (2,10) eingefügte Förderleitung (17) sowie einen in diese eingefügten Aktuator (1) mit einem Antriebselement (7) zur Massenstrommodulation der Flüssigkeit beinhaltet, **dadurch gekennzeichnet**, daß das Antriebselement zumindest ein elektrostriktives oder magnetostriktives Bauteil (7) aufweist, dem ein Kolben (6) zur Übertragung einer von dem Bauteil (7) erzeugten Stellkraft auf die Flüssigkeit zugeordnet ist, daß ein Regler (31) zur Bereitstellung eines Stellsignales (14) für den Aktuator (1) sowie ein zwischen dem Aktuator (1) und einer Pumpe (12) in der Fördereinrichtung (3) vorgesehenes Druckwandlermittel (16) zur Bereitstellung eines Eingangssignales (29) für den Regler (31) vorgesehen sind, und daß der Regler (31) eingerichtet ist zum Ausgleich von Schwankungen eines Massenstroms der Flüssigkeit, welche Schwankungen von der Pumpe (12) verursacht werden und mit dem Eingangssignal (29) zu dem Regler (31) gelangen, mittels des dem Aktuator (1) zugeführten Ausgangssignals (14).

5. Anordnung nach Anspruch 4, bei der ein stromab des Aktuators (1) in die Förderleitung (17) eingefügtes weiteres Druckwandlermittel (15) vorgesehen ist zur Bereitstellung eines weiteren Eingangssignals (30) für den Regler (31), wobei der Regler (31) eingerichtet ist zum Ausgleich der Schwankungen zusätzlich in Abhängigkeit von dem weiteren Eingangssignal (30).

6. Anordnung nach Anspruch 4 oder 5, bei der die Pumpe (12) eingerichtet ist zur Förderung der Flüssigkeit bei einer Drehzahl, und bei der der Regler (31) eingerichtet ist zum Ausgleich der Schwankungen zusätzlich in Abhängigkeit von der Drehzahl.

7. Anordnung in einer Anlage zur Förderung einer Flüssigkeit von einer Fördereinrichtung (3) zu einer Düse (2,19) an einem Verbrennungssystem (34), welche Anordnung eine Förderleitung (17) sowie einen in diese eingefügten Aktuator (1) zur Massenstrommodulation der Flüssigkeit mittels eines Antriebselementes (7) beinhaltet, **dadurch gekennzeichnet**, daß daß das Antriebselement zumindest ein elektrostriktives oder magnetostriktives Bauteil (7) aufweist, dem ein Kolben (6) zur Übertragung einer von dem Bauteil (7) erzeugten Stellkraft auf die Flüssigkeit zugeordnet ist, wobei die Düse (2,10) zur Förderung der Flüssigkeit in das Verbrennungssystem (34) vorgesehen ist, daß ein Druckwandler (35) zur Erzeugung eines Drucksignals (37) und/oder ein optischer Wandler (36) zur Erzeugung eines Leistungssignals (38) an das Verbrennungssystem (34) angeschlossen ist bzw. sind, und daß ein Regler (39) vorgesehen ist zur Erzeugung eines Stellsignals (14) für den Aktuator (1) in Abhängigkeit von dem Drucksignal (37) und/oder dem Leistungssignal (39).

8. Anordnung nach Anspruch 7, bei der in der Förderleitung (17) stromab des Aktuators (1) ein weiterer Druckwandler (15) zur Erzeugung eines weiteren Drucksignals (30) vorgesehen ist und der Regler (39) eingerichtet ist zur Erzeugung des Stellsignals (14) zusätzlich in Abhängigkeit von dem weiteren Drucksignal (30), zur Berücksichtigung des Übertragungsverhaltens des Aktuators (1).

9. Anordnung nach Anspruch 7 oder 8, bei der das Verbrennungssystem (34) eine Brennkammer (34) einer Gasturbine ist.

10. Anordnung nach einem der Ansprüche 4 bis 9, bei der die Förderleitung (17) eine zur Verbesserung des übertragungsverhaltens des Aktuators (1) in einem bestimmten Frequenzbereich gezielt abgestimmte Resonanzfrequenz aufweist.

11. Verwendung des Aktuators (1) nach einem der Ansprüche 1 bis 3 in einer Anordnung, in der eine Flüssigkeit unter Druck von einer Fördereinrichtung (3) durch eine Förderleitung (17) zu einer Düse (2,10) gefördert wird, wobei der Aktuator (1) in die Förderleitung (17) eingefügt und vorgesehen ist, um der Flüssigkeit eine Massenstrommodulation aufzuprägen und die Flüssigkeit dabei fein zu zerstäuben oder zu einem aus der Düse (2,10) austretenden pulsierenden scharfen Strahl mit hohem Impuls zu formen.

12. Verwendung nach Anspruch 11, wobei die Flüssigkeit ein flüssiger Brennstoff ist und zur Verbrennung des Brennstoffes in eine Brennkammer (34) eingespritzt wird.

13. Verwendung nach Anspruch 12, wobei die Verbrennung durch die Massenstrommodulation pulsierend erfolgt.

14. Verwendung nach Anspruch 12 oder 13, wobei in der Verbrennung auftretende Verbrennungsschwingungen durch die Massenstrommodulation bedämpft werden.


## Claims

1. Actuator (1) for insertion between a nozzle (2, 10) and a conveyance device (3) with a drive element for the mass flow modulation of a liquid flowing from the conveyance device (3) to the nozzle (2, 10), characterised in that the drive element is an arrangement with at least one electrostrictive or magnetostrictive component (7), wherein there is assigned to the component (7) a piston (6) for transferring onto the liquid an actuating force generated by the component (7).

2. Actuator (1) according to claim 1, in which the piston (6) has a front surface actable on by the liquid and the component (7) has a front surface resting against the piston (6), wherein the front surface of the piston (6) actable on by the liquid is greater than the front surface of the component (7) resting against the piston (6).

3. Actuator (1) according to claim 1 or 2, in which the drive element contains several electrostrictive or magnetostrictive components (7), wherein an associated piston (6) is assigned to each component.

4. Arrangement in a plant for the conveyance of a liquid from a conveyance device (3) to a nozzle (2, 10), which arrangement comprises a conveyance line (17) inserted between the conveyance device (3) and the nozzle (2, 10) as well as an actuator (1) inserted into the latter with a drive element (7) for the mass flow modulation of the liquid, characterised in that the drive element comprises at least one electrostrictive or magnetostrictive component (7) to which is assigned a piston (6) for transferring onto the liquid an actuating force generated by the component (7), that a controller (31) for producing an actuation signal (14) for the actuator (1) as well as a pressure transducer means (16), provided in the conveyance device (3) between the actuator (1) and a pump (12), for producing an input signal (29) for the controller (31) are provided, and that the controller (31) is set up for the equalizing of fluctuations of a mass flow of the liquid, which fluctuations are caused by the pump (12) and pass to the controller (31) together with the input signal (29), by means of the output signal (14) fed to the actuator (1).

5. Arrangement according to claim 4, in which a further pressure transducer means (15) inserted into the conveyance line (17) downstream of the actuator (1) is provided for the provision of a further input signal (30) for the controller (31), wherein the controller (31) is set up for the equalizing of the fluctuations additionally as a function of the further input signal (30).

6. Arrangement according to claim 4 or 5, in which the pump (12) is set up for the conveyance of the liquid at a rotational speed, and in which the controller (31) is set up for the equalizing of the fluctuations additionally as a function of the rotational speed.

7. Arrangement in a plant for the conveyance of a liquid from a conveyance device (3) to a nozzle (2, 19) in a combustion system, which arrangement comprises a conveyance line (17) as well as an actuator (1) inserted into the latter for the mass flow modulation of the liquid by means of a drive element (7), characterised in that the drive element comprises at least one electrostrictive or magnetostrictive component (7) to which is assigned a piston (6) for transferring onto the liquid an actuating force generated by the component (7), wherein the nozzle (2, 10) is provided for conveying the liquid into the combustion system (34), that a pressure transducer (35) for generating a pressure signal (37) and/or an optical transducer (36) for generating an output signal (38) is or are connected to the combustion system (34), and that a controller (39) is provided for generating an actuation signal (14) for the actuator (1) as a function of the pressure signal (37) and/or the output signal (39).

8. Arrangement according to claim 7, in which a further pressure transducer means (15) is provided in the conveyance line (17) downstream of the actuator (1) for generating a further pressure signal (30) and the controller (39) is set up for generating the actuation signal (14) additionally as a function of the further pressure signal (30), in order to allow for the transfer behaviour of the actuator (1).

9. Arrangement according to claim 7 or 8, in which the combustion system (34) is a combustion chamber (34) of a gas turbine.

10. Arrangement according to one of claims 4 to 9, in which the conveyance line (17) has a selectively tuned resonance frequency for improving the transfer behaviour of the actuator (1) in a particular frequency range.

11. Use of the actuator (1) according to one of claims 1 to 3 in an arrangement in which a liquid under pressure is fed from a conveyance device (3) through a conveyance line (17) to a nozzle (2, 10), wherein the actuator (1) is inserted into the conveyance line (17) and provided in order to impress on the liquid a mass flow modulation and in so doing to finely atomize the liquid or to form it into a solid pulsating jet leaving the nozzle (2, 10) with a high pulse.

12. Use according to claim 11, in which the liquid is a liquid fuel and is injected for the combustion of the fuel into a combustion chamber (34).

13. Use according to claim 12, in which the combustion takes place pulsatingly due to the mass flow modulation.

14. Use according to claim 12 or 13, in which combustion oscillations occurring in the combustion are damped by the mass flow modulation.

**Revendications**

1. Dispositif d'actionnement (1) destiné à être interposé entre une buse (2, 10) et un dispositif d'alimentation (3), comprenant un élément d'actionnement servant à moduler le courant de masse d'un liquide s'écoulant du dispositif d'alimentation (3) vers la buse (2, 10),
   caractérisé en ce que l'élément d'actionnement est formé par un dispositif pourvu d'au moins un élément électrostrictif ou magnétostrictif (7), un piston (6) servant à transmettre au liquide une force de réglage produite par l'élément (7) étant associé à l'élément (7).

2. Dispositif d'actionnement (1) selon la revendication 1, dans lequel le piston (6) a une surface frontale pouvant être soumise à l'action du liquide et l'élément (7) a une surface frontale touchant le piston (6), la surface frontale du piston (6) pouvant être soumise à l'action du liquide étant plus grande que la surface frontale de l'élément (7) touchant le piston (6).

3. Dispositif d'actionnement (1) selon l'une des revendications 1 ou 2, dans lequel l'élément d'actionnement comprend plusieurs éléments électrostrictifs ou magnétostrictifs (7), un piston correspondant (6) étant à associé, respectivement, à chaque élément.

4. Système dans une installation pour l'alimentation d'un liquide d'un dispositif d'alimentation (3) vers une buse (2, 10), lequel système comprend une conduite d'alimentation (17) insérée entre le dispositif d'alimentation (3) et la buse (2, 10) ainsi qu'un dispositif d'actionnement (1) interposé dans cette conduite et comprenant un élément d'actionnement (7) servant à moduler le courant de masse du liquide, caractérisé en ce que l'élément d'actionnement comprend au moins un élément électrostrictif ou magnétostrictif (7) auquel est associé un piston (6) servant à transmettre au liquide une force de réglage produite par l'élément (7), en ce que l'on prévoit un régulateur (31) servant à fournir un signal de commande (14) pour le dispositif d'actionnement (1) ainsi qu'un moyen de convertisseur de pression (16) situé entre le dispositif d'actionnement (1) et une pompe (12) dans le dispositif d'alimentation (3) et servant à fournir un signal d'entrée (29) pour le régulateur (31), et en ce que le régulateur (31) est adapté pour compenser les fluctuations d'un courant de masse du liquide - lesquelles fluctuations sont causées par la pompe (12) et parviennent au régulateur (31) avec le signal d'entrée (29) - au moyen du signal de sortie (14) amené au dispositif d'actionnement (1).

5. Système selon la revendication 4, dans lequel on prévoit un autre moyen de convertisseur de pression (15) inséré dans la conduite d'alimentation (17) en aval du dispositif d'actionnement (1) et servant à fournir un autre signal d'entrée (30) pour le régulateur (31), le régulateur (31) étant adapté pour compenser les fluctuations en fonction, en plus, de l'autre signal d'entrée (30).

6. Système selon l'une des revendications 4 ou 5, dans lequel la pompe (12) est réglée pour refouler le liquide à une certaine vitesse de rotation, et dans lequel le régulateur (31) est adapté pour compenser les fluctuations en fonction, en plus, de la vitesse de rotation.

7. Système dans une installation pour l'alimentation d'un liquide d'un dispositif d'alimentation (3) vers une buse (2, 19) au niveau d'un système de combustion (34), lequel système comprend une conduite d'alimentation (17) ainsi qu'un dispositif d'actionnement (1) interposé dans cette conduite et servant à moduler le courant de masse du liquide au moyen d'un élément d'actionnement (7), caractérisé en ce que l'élément d'actionnement comprend au moins un élément électrostrictif ou magnétostrictif (7) auquel est associé un piston (6) servant à transmettre au liquide une force de réglage produite par l'élément (7), la buse (2, 10) étant prévue pour alimenter le liquide dans le système de combustion (34), en ce qu'un convertisseur de pression (35) destiné à produire un signal de pression (37) et/ou un convertisseur optique (36) destiné à produire un signal de puissance (38) est resp. sont relié/s au système de combustion (34), et en ce qu'on prévoit un régulateur (39) pour produire un signal de commande (14) pour le dispositif d'actionnement (1) en fonction du signal de pression (37) et/ou du signal de puissance (39).

8. Système selon la revendication 7, dans lequel un autre convertisseur de pression (15) est prévu dans la conduite d'alimentation (17) en aval du dispositif d'actionnement (1) pour produire un autre signal de pression (30) et le régulateur (39) est adapté pour produire le signal de commande (14) en fonction, en plus, du signal de pression supplémentaire (30), afin de tenir compte du comportement de transfert du dispositif d'actionnement (1).

9. Système selon l'une des revendications 7 ou 8, dans lequel le système de combustion (34) est une chambre de combustion (34) d'une turbine à gaz.

10. Système selon l'une des revendications 4 à 9, dans lequel la conduite d'alimentation (17) a une fréquence de résonance accordée de manière ciblée dans une gamme de fréquences déterminée pour améliorer le comportement de transfert du dispositif d'actionnement (1).

11. Utilisation du dispositif d'actionnement (1) selon l'une des revendications 1 à 3 dans un système dans lequel un liquide sous pression est alimenté d'un dispositif d'alimentation (3) vers une buse (2, 10) à travers une conduite d'alimentation (17), le dispositif d'actionnement (1) étant interposé dans la conduite d'alimentation (17) et étant prévu pour imposer au liquide une modulation du courant de masse et pour de ce fait, pulvériser le liquide finement ou le transformer en un jet vif pulsé sortant de la buse (2, 10) à force impulsive élevée.

12. Utilisation selon la revendication 11, le liquide étant un combustible liquide et étant injecté dans une chambre de combustion (34) en vue de la combustion du combustible.

13. Utilisation selon la revendication 12, la combustion se déroulant par pulsation en raison de la modulation du courant de masse.

14. Utilisation selon l'une des revendications 12 ou 13, les pulsations survenant dans la combustion étant amorties par la modulation du courant de masse.

Flüssigkeit

Abbildung 1

Abbildung 2

**Abbildung 3a**

**Abbildung 3b**

Abbildung
4

Abbildung 5

37

38

30

34

35

36

**Regelsystem**
z.B.
- adaptive Filter
-
Phasenschieber

39

33  2

15

1

Luft

17

14

32

Brennstoff

16

29

3

Abbildung 6

Abbildung 7a

Abbildung 7b